# EUROPEAN PATENT APPLICATION

(11) **EP 4 803 379 A1**
(43) Date of publication of application: **09.09.2026**
(21) Application number: 26160531.5
(22) Date of filing: 24.02.2026
(51) Int. Cl.: B60R 13/02, F16B 5/06

(54) **FLOATABLE CLIP RETAINER**

(30) Priority: 03.03.2025 US 202519068899
(71) Applicant: Tesla, Inc., Austin, TX 78725 (US)
(72) Inventor: YU, Yongquan, Austin, Texas, 78725 (US); SEDKY SAAD, Mario Raafat, Austin, Texas, 78725 (US)
(74) Representative: Bryn-Jacobsen, Caelia

(57) **Abstract**

A fastener (114) can be used to attach a trim component (112) to a vehicle body (110). The fastener can include a base (212) with a track (222) for receiving the vehicle body and allowing translation along a first directional axis (402). A retention snap (218) can extend from the base. The retention snap can be engageable with the vehicle body to removably couple the base to the vehicle body. A slot (216) can extend through the base. The slot can be configured to receive a clip (206) and permit translation along a second directional axis (408). The fastener can also include a window (226) formed in the base. The window can be configured to receive the clip when the clip is inserted into the slot, coupling the trim component to the vehicle body.

## Description

### BACKGROUND

Fasteners can play an important role in the automotive industry by enabling the secure attachment of trim components to vehicle bodies. These trim components, such as door panels, headliners, and interior trim, not only improve or define the aesthetic appeal of automobiles but also can improve functional performance. The design and implementation of fasteners seek to ensure that these components remain securely in place, but in conventional fasteners this result has not always been successfully achieved. Fasteners can be permanent or removable, but conventional fasteners typically cannot be re-used and lack grip strength when attempts are made to re-use them.

### BRIEF DESCRIPTION OF THE DRAWINGS

Various examples are illustrated in the figures of the accompanying drawings. Such examples are demonstrative and not intended to be exhaustive or exclusive examples of the present subject matter.
FIG. 1 illustrates an isometric view of an automotive vehicle, according to some examples.
FIG. 2 illustrates an exploded perspective view of a fastener for coupling a trim component and a portion of a vehicle body, according to some examples.
FIG. 3 illustrates a perspective view of a fastener for coupling a trim component and a portion of a vehicle body, according to some examples.
FIG. 4 illustrates a bottom view of a fastener for coupling a trim component and a portion of a vehicle body, according to some examples.
FIG. 5 illustrates a rear view of a fastener for coupling a trim component and a portion of a vehicle body, according to some examples.
FIG. 6 illustrates a side view of a fastener for coupling a trim component and a portion of a vehicle body, according to some examples.
FIG. 7 illustrates a bottom view of a fastener coupling a trim component and a portion of a vehicle body where a retention snap and a second retention snap limit translation of the body relative to the vehicle body in a first direction along the first directional axis, according to some examples.
FIG. 8 illustrates a bottom view of a fastener coupling a trim component and a portion of a vehicle body where a portion of a body of the fastener limits translation of the body relative to a vehicle body in a second direction along the first directional axis, according to some examples.
FIG. 9 illustrates a perspective view of a fastener coupling a trim component and a portion of a vehicle body where a portion of a body of the fastener limits translation of the body relative to the vehicle body in a second direction along a first directional axis, according to some examples.
FIG. 10 illustrates a partial cross-sectional exploded view of a fastener, a trim component, and a portion of a vehicle body, according to some examples.
FIG. 11 illustrates a partial cross-sectional view of a fastener coupling a trim component and a portion of a vehicle body, according to some examples.
FIG. 12 illustrates a rear view of a fastener coupling a trim component and a portion of a vehicle body where a first surface of a window engages the clip to limit translation of a body relative to a trim component in a third direction along a second directional axis, according to some examples.
FIG. 13 illustrates a rear view of a fastener coupling a trim component and a portion of a vehicle body where a second surface of a window engages the clip to limit translation of a body relative to a trim component in a fourth direction along a second directional axis, according to some examples.
FIG. 14 illustrates a flowchart of an example of a method of installing a fastener, in accordance with one example.

### DETAILED DESCRIPTION

Fastening systems are used in numerous industries, seeking to join components securely and efficiently. These systems can encompass a wide array of fastener types, including screws, bolts, clips, adhesives, or the like, each designed to meet specific application needs.

Screws are widely used due to their ability to create strong, removable connections. They may be particularly advantageous in applications where disassembly and reassembly are required, such as in maintenance or repair tasks. However, the installation of screws can be time-consuming, as it often involves precise alignment and the application of appropriate torque to ensure a secure fit.

Bolts, similar to screws, may offer robust connections and are typically used in conjunction with nuts to fasten components tightly. They are generally favored in applications requiring high strength and load-bearing capacity, such as in construction and heavy machinery. The installation of bolts, while generally straightforward, can also be labor-intensive, especially in large-scale applications.

Adhesives may offer a unique advantage by providing a clean and seamless finish, eliminating the need for visible mechanical fasteners. This may make them particularly suitable for applications where aesthetics are a priority, such as in consumer electronics and furniture. Despite their aesthetic benefits, adhesives may not provide the same durability as mechanical fasteners, especially in environments subject to high stress or temperature variations.

Clips can sometimes provide a quick and easy fastening solution, potentially making them a good fit for applications where speed and efficiency are paramount. They are commonly used in automotive and electronics industries, where components need to be assembled rapidly.

Overarching design goals for fasteners can including balancing between ease of installation, strength, and appearance. This balance helps to ensure that fasteners meet both the functional and aesthetic requirements of their intended applications. However, a vehicle body (e.g., a component coupled to the vehicle body or frame, or the like) and a trim component presents a relatively unique problem for fastener systems. Some fasteners cannot be used because of the misalignment of the components. For example, manufacturing tolerances can cause misalignment of the components. As manufacturing tolerances stack up, the misalignment can be increased. These misalignments can make installation of the trim component on the portion of the vehicle body difficult and can cause aesthetic concerns (e.g., gaps, angles, or the like). Thus, a fastener system that can accommodate or compensate for component misalignment in more than one axis can help provide a viable fastener that can be efficiently installed. The present disclosure provides a fastener clip that is adjustable along two translation axes to help address the issues above.

In examples, a fastener for attaching a trim component to a vehicle body can include a base including a track to receive the vehicle body and permit translation of the base relative to the vehicle body along a first directional axis. A retention snap can extend from the base. The retention snap can be engageable with the vehicle body to removably couple the base to the vehicle body. A slot can extend through the base. The slot can receive a clip. The clip can be coupled to a tower of the trim component. The slot can permit translation of the clip relative to the base along a second directional axis. A window can be formed in the base. The window can receive and retain the clip and the tower within the base when the clip is inserted into the slot to couple the trim component to the vehicle body.

In examples, a vehicle trim attachment system can include a vehicle body. A trim component can include a tower extending from an underside of the trim component. A clip can be connected to the tower. A fastener for attaching a trim component to a vehicle body can include a base including a track to receive the vehicle body and permit translation of the base relative to the vehicle body along a first directional axis. A retention snap can extend from the base. The retention snap can be engageable with the vehicle body to removably couple the base to the vehicle body. A slot can extend through the base. The slot can be configured to receive a clip. The clip can be coupled to a tower of the trim component. The slot can be configured to permit translation of the clip relative to the base along a second directional axis. A window formed in the base can be configured to receive the clip when the clip is inserted into the slot to couple the trim component to the vehicle body.

In examples, a method of attaching a trim component to a vehicle body can include obtaining a fastener including a base. A track formed in the base, a retention snap extending from the base, and a slot formed in the base. The method can also include inserting a portion of the vehicle body into the track to allow movement of the base relative to the vehicle body along a first directional axis relative to the base. Engaging the retention snap with the vehicle body to removably couple the base to the vehicle body. The method can also include inserting a clip on a tower of the trim component at least partially into the slot of the base to couple the trim component to the vehicle body. The slot can be configured to permit the clip and the tower to translate within the fastener along a second directional axis relative to the base. The second directional axis can be substantially perpendicular to the first directional axis.

The above discussion is intended to provide an overview of the subject matter of the present patent application. It is not intended to provide an exclusive or exhaustive explanation. The description below is included to provide further information about the present patent application.

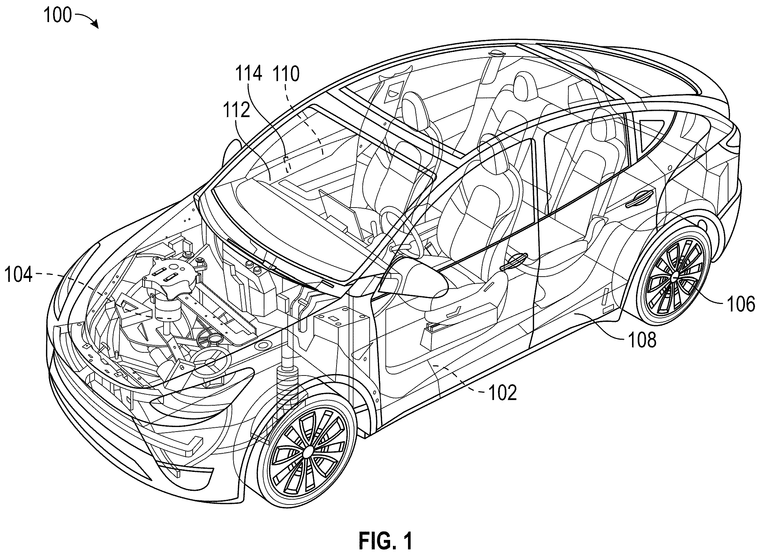

FIG. 1 illustrates an isometric view of an automotive vehicle 100, according to some examples. The automotive vehicle 100 can be a car, vehicle, automobile, or the like, operable to transport occupants or items over a road or other terrain. The automotive vehicle 100 can include a frame or a chassis 102, a drivetrain 104, wheels 106, a vehicle body 110, and a trim component 112. The wheels 106 can engage with a road or terrain and can be configured to support the automotive vehicle 100. The chassis 102 can support the drivetrain 104, which can be connected to the wheels 106. The drivetrain 104 can be operable to drive the wheels 106 to rotate such as to move the automotive vehicle 100. The vehicle body panels 108 can be connected to the chassis 102 and can help to reinforce the chassis 102 and improve drag or air resistance during transportation. The automotive vehicle 100 can also include one or more seats or seat assemblies securable to the chassis 102 and configured to support and help restrain occupants within the automotive vehicle 100.

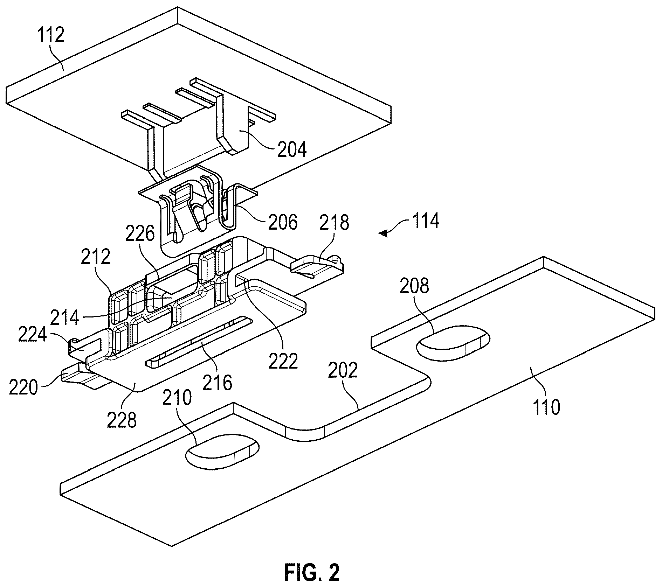

A fastener 114 can help attach the trim component 112 to the vehicle body 110, which can be connected to the chassis 102. The fastener 114 can be made of plastic, metal, polymers, composites, combinations thereof, or the like. When fully installed, the fastener 114 can couple the trim component 112 to the vehicle body 110. For example, the fastener 114 can prevent, limit, or inhibit translation of the trim component 112 away from the vehicle body 110 when fully installed. The fastener 114 or coupling the vehicle body 110 and the trim component 112 will be discussed in more detail with reference to FIG. 2 - FIG. 14.

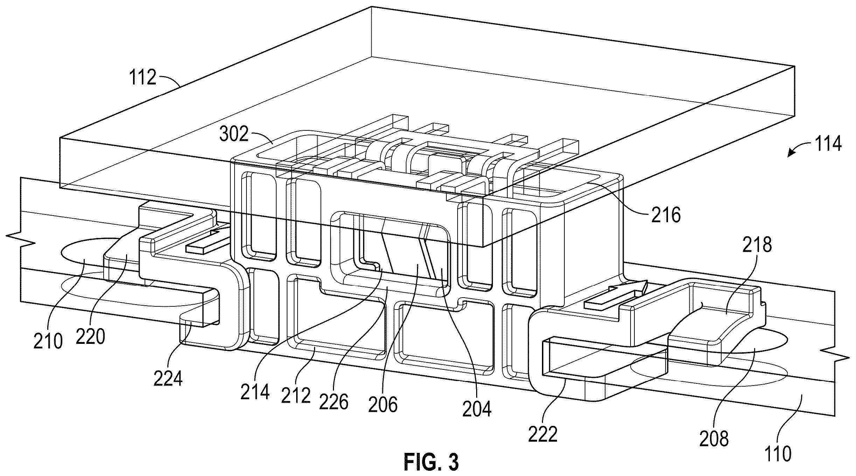

FIG. 2 and FIG. 3 will be discussed together. FIG. 2 illustrates an exploded perspective view of a fastener 114 for coupling a trim component 112 and a portion of a vehicle body, or components attached to the vehicle body or frame (e.g., a vehicle body 110), according to some examples. FIG. 3 illustrates a perspective view of a fastener 114 for coupling a trim component 112 and a vehicle body 110, according to some examples. The fastener 114 and the vehicle body portion 110 can be consistent with FIG. 1 discussed above. FIGS. 2 and 3 show additional details and features of the fastener 114 and the vehicle body portion 110.

As best shown in FIG. 2, the vehicle body 110 can include a cutout 202, a first bore 208, and a second bore 210. The trim component 112 can include a tower 204 extending from an underside of the trim component 112. A clip 206 can be connected or connectable to (e.g., coupled, installed on, or the like) the tower 204 (as first shown in FIG. 3). The fastener 114 can include a base 212, a first retention snap 218, a second retention snap 220, a first track 222, a second track 224, and a window 226.

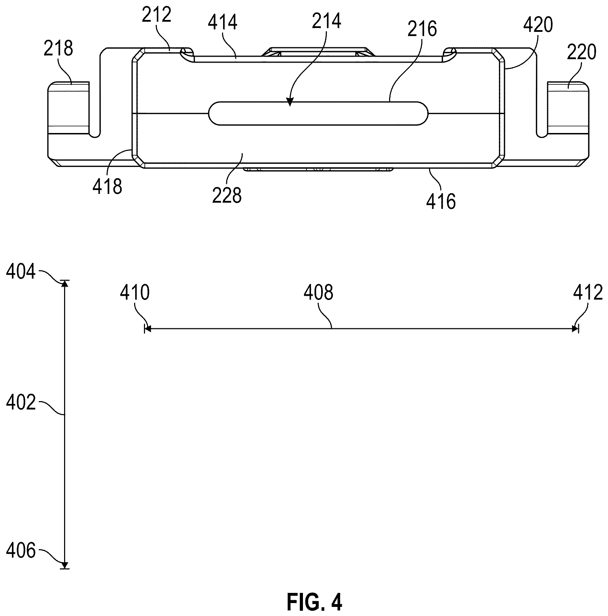

The base 212 be configured to be coupled to the vehicle body 110 and the trim component 112 via features of the base 212. At least a portion of the base 212 can include a hollow portion 214. For example, the base 212 can include a slot 216 formed therein and extending through the base 212. The slot 216 can permit access to the hollow portion 214 from outside the base 212. As shown in FIG. 3, the slot 216 can be formed in the fifth wall 228 (the first wall 414, second wall 416, third wall 418, and the fourth wall 420 will be discussed with reference to FIG. 4 and the sixth wall 302 is first shown in FIG. 3) of the base 212. The slot 216 formed in the fifth wall 228 can permit access to the clip 206 after the clip 206 is inserted into the base 212 to help release the clip 206 from the windows 226. The window 226 can be formed in the base 212. The window 226 can receive the clip 206 when the clip 206 is inserted into the hollow portion 214 via the slot 216 to couple the trim component 112 to the vehicle body 110.

The slot 216 formed in the sixth wall 302, as shown in FIG. 3, can receive the tower 204 and the clip 206 to provide access for the clip 206 to the hollow portion 214 and the window 226. In other words, the tower 204 can extend from an underside of the trim component 112 and can receive the clip 206 such that the clip 206 can be connected to (e.g., coupled, installed on, or the like) the tower 204. The clip 206 and the tower 204 can be inserted through the slot 216 and can extend through the sixth wall 302 and within the hollow portion 214 (FIG. 4) such that the clip 206 can extend at least partially into the window 226 to secure the clip 206 to the base 212. Then, the slot 216 formed in the fifth wall 228 can permit a tool or other implement to engage the clip 206 to compress the clip and disengage the clip 206 and the windows 226 to permit the trim component 112, the clip 206 and the tower 204 to be removed from the base 212.

The base 212 can include the first track 222 and the second track 224 that can receive the vehicle body 110 and can permit translation of the base 212 relative to the vehicle body 110 along a first directional axis (e.g., a first directional axis 402, FIG. 4) or plane when the base 212 is inserted into the cutout 202 of the vehicle body 110. The first retention snap 218 and the second retention snap 220 can be engageable with the vehicle body 110 to removably couple the base 212 to the vehicle body 110. For example, as shown in FIG. 2, the first retention snap 218 can extend at least partially into the first bore 208 and the second retention snap 220 can extend at least partially into the second bore 210 when the fastener 114 is inserted within the cutout 202.

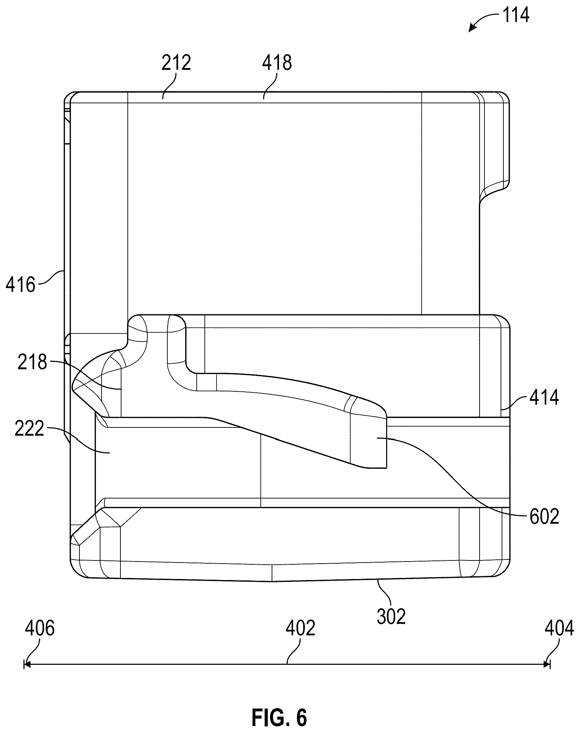

FIG. 4 illustrates a bottom view of a fastener 114 for coupling a trim component (e.g., the trim component 112, FIG. 1) and a vehicle body (e.g., the vehicle body 110, FIG. 1). FIG. 4 includes a graphical representation of the first directional axis 402 and the second directional axis 408, which define the first direction 404 and the second direction 406 and the third direction 410 and the fourth direction 412, respectively. As shown in FIG. 4, the fastener 114 can include a first wall 414, a second wall 416, a third wall 418, a fourth wall 420, a fifth wall 228, and a sixth wall 302 (FIG. 6).

The base 212 can extend in the first direction 404 and the second direction 406 along the first directional axis 402 and the base 212 can extend in the third direction 410 and the fourth direction 412 along the second directional axis 408. The first wall 414 and the second wall 416 can each extend along the second directional axis 408. The third wall 418 and the fourth wall 420 can each extend between the first wall 414 and the second wall 416 along the first directional axis 402. Thus, the first wall 414 can be parallel to the second wall 416 and the third wall 418 can be parallel to the fourth wall 420. The third wall 418 can include the first track 222 extending therefrom in the third direction 410 along the second directional axis 408. The fourth wall 420 can include the second track 224. The second track 224 can extend from the fourth wall 420 in the fourth direction 412 along the second directional axis 408. The fifth wall 228 and the sixth wall 302 can extend between the first wall 414, the second wall 416, the third wall 418, and the fourth wall 420 and include the slot 216. The first wall 414, the second wall 416, the third wall 418, the fourth wall 420, the fifth wall 228, and the sixth wall 302 can define the hollow portion 214 of the base 212.

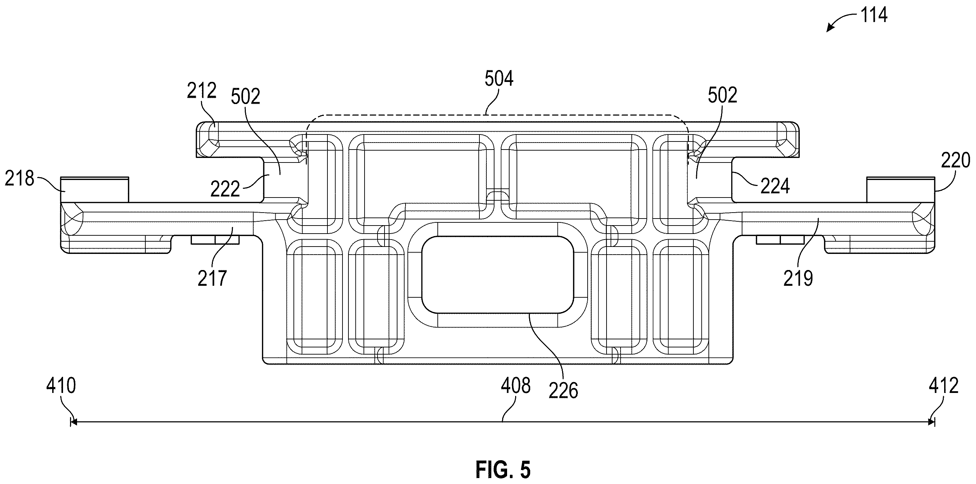

FIG. 5 illustrates a front view of a fastener 114 for coupling a trim component 112 (FIG. 1) and a vehicle body 110 (FIG. 1), according to some examples.

Each of the first track 222 and a second track 224 can include a tapered surface 502. The tapered surfaces 502 of the first track 222 and the second track 224 can increase a distance 504 between the first track 222 and the second track 224 as the tapered surface 502 extends in the second direction (e.g., into the figure or page, also referred to herein as the second direction 406 along the first directional axis 402, FIG. 4). Thus, the tapered surface 502 can guide the base 212 within a cutout 202 (FIG. 2) of the vehicle body 110 (FIG. 1).

A first arm 217 can extend from the base 212 in the third direction 410 along the second directional axis 408. The first retention snap 218 can extend from the first arm 217 in the third direction 410 and can extend in the first direction 404 of the first directional axis 402. A second arm 219 can extend from the base 212 in the fourth direction 412 along the second directional axis 408. The second retention snap 220 can extend from the second arm 219 in the fourth along 412 and can extend from the second arm 219 in the first direction 404 along the first directional axis 402. The first arm 217 and the second arm 219 can at least partially form the first track 222 and the second track 224, respectively.

FIG. 6 illustrates a side view of a portion of a fastener 114 for coupling a trim component 112 (FIG. 1) and a vehicle body 110 (FIG. 1), according to some examples. As shown in FIG. 6, the first retention snap 218 can include a distal end portion 602. The first retention snap 218 can extend in the first direction 404 to form or define the distal end portion 602. As the first retention snap 218 extends toward the distal end portion 602, the distal end portion 602 can extend toward the sixth wall 302 such that the distal end portion 602 extends within the first track 222. The extension of the first retention snap 218 enables the first retention snap 218 to engage with a vehicle body 110 when the body 110 is at least partially within the first track 222 such that the first retention snap 218 can engage with the vehicle body to couple the fastener 114 to the vehicle body.

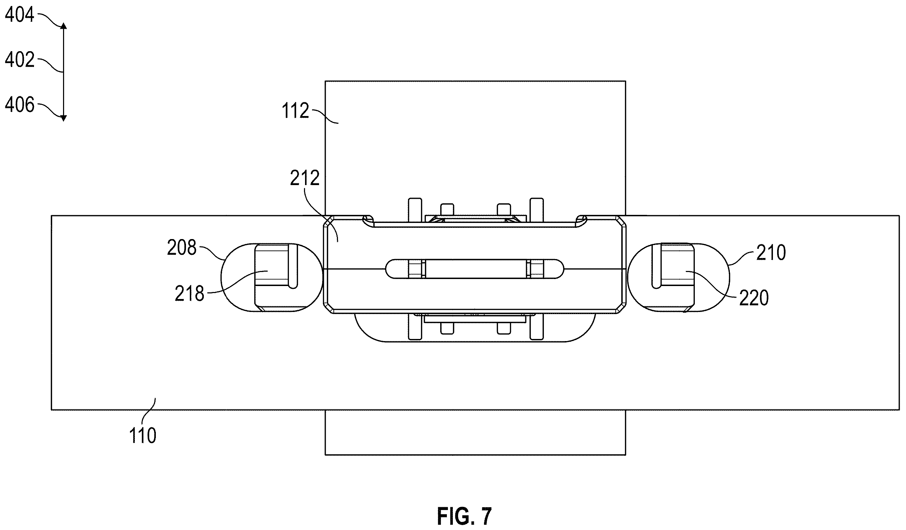

FIG. 7 - FIG. 9 will be discussed together as each of FIG. 7 - FIG. 9 illustrates limits of translation of the base 212 relative to the vehicle body 110 along the first directional axis 402 (FIG. 4). FIG. 7 illustrates a bottom view of the fastener 114 coupling the trim component 112 and the vehicle body 110 where the first retention snap 218 and the second retention snap 220 engage with the first bore 208 and the second bore 210, respectively, of the vehicle body 110 to limit translation of the base 212 relative to the vehicle body 110 in the first direction 404 along the first directional axis 402, according to some examples.

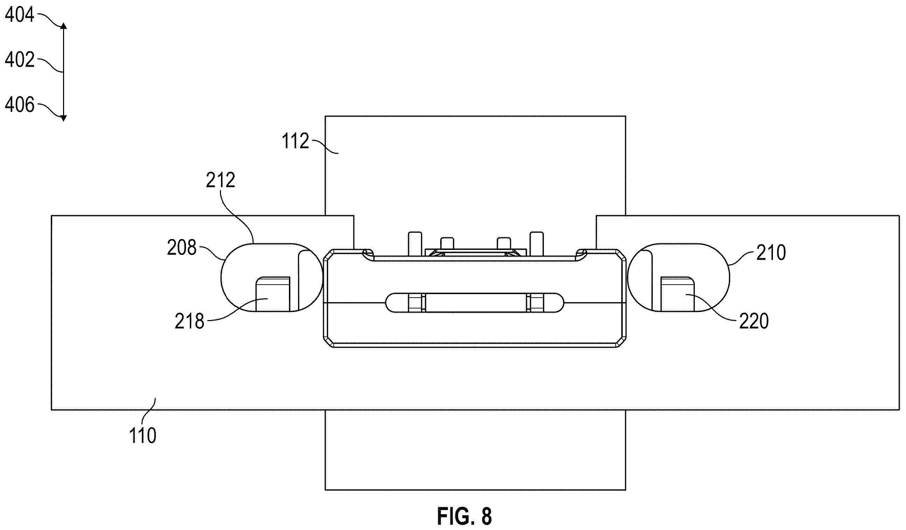

FIG. 8 illustrates a bottom view of the fastener 114 coupling the trim component 112 and the vehicle body 110 where a portion of the base 212 limits translation of the base 212 relative to the vehicle body 110 in the second direction 406 along the first directional axis 402, according to some examples. In examples, when the base 212 moves in the second direction 406 relative to the panels 108, the first retention snap 218 and the second retention snap 220 no longer engage the first bore 208 and the second bore 210, respectively. In examples, when the base 212 moves in the second direction 406 relative to the panels 108, the first retention snap 218 and the second retention snap 220 can engage a portion of the first bore 208 and the second bore 210 that is the farthest in the second direction 406, respectively.

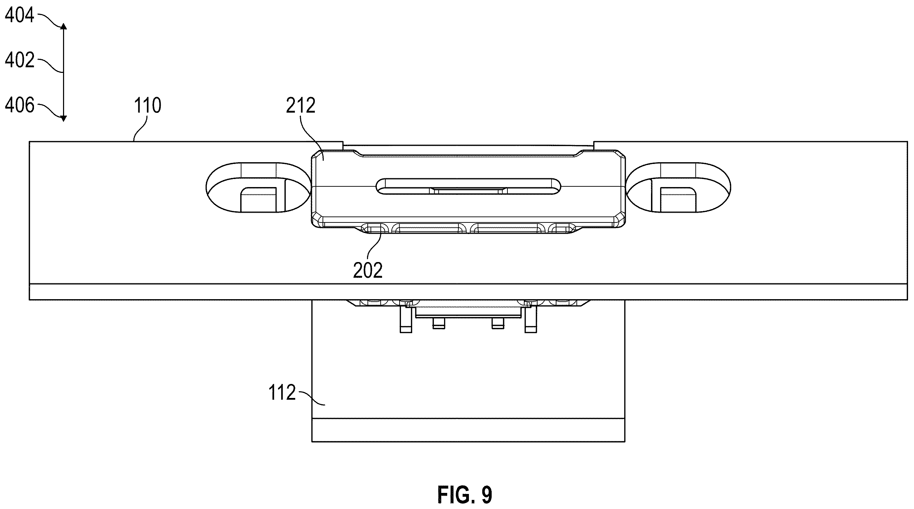

FIG. 9 illustrates a perspective view of a fastener 114 coupling the trim component 112 and the vehicle body 110 where the portion of the base 212 limits translation of the base 212 relative to the vehicle body 110 in the second direction 406 along the first directional axis 402, according to some examples. The engagement of the base 212 and the cutout 202 inhibits or prevents further translation of the base 212 in the second direction 406 relative to the vehicle body 110.

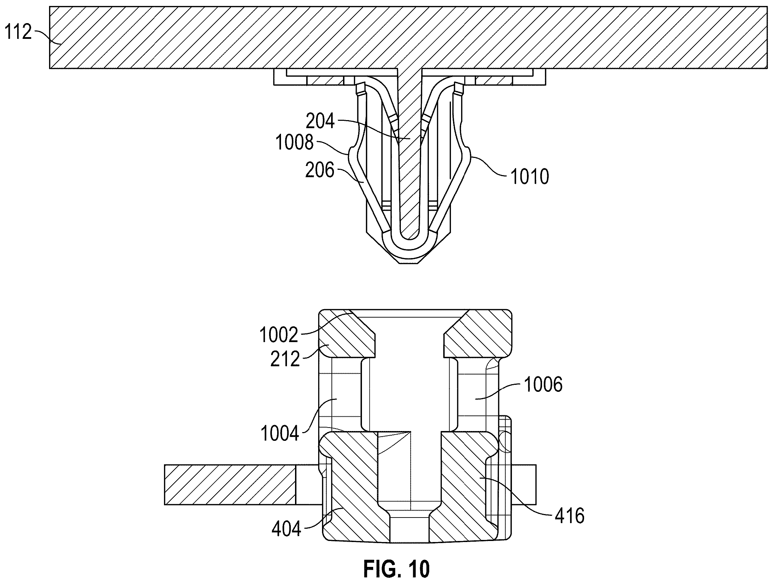

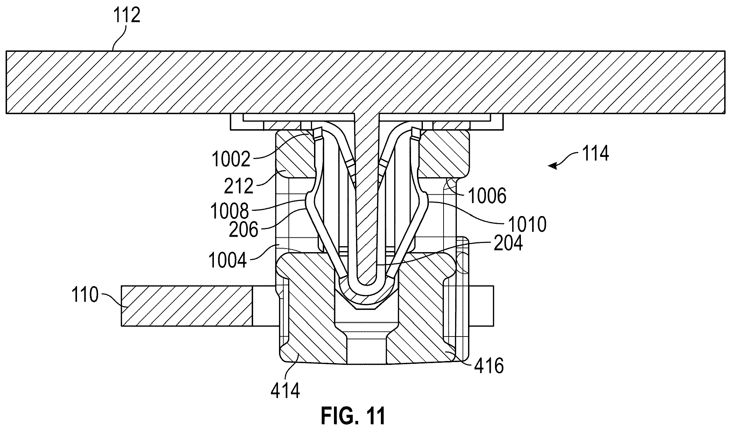

FIG. 10 and FIG. 11 will be discussed together. FIG. 10 illustrates a partial cross-sectional exploded view of the fastener 114, the trim component 112, and the vehicle body 110, according to some examples. As discussed herein, the base 212 can include the first window 1004 formed in the first wall 414 and the second window 1006 formed in the second wall 416. Hereinafter, the first window 1004 and the second window 1006 will be discussed together as the windows 226. As shown in FIG. 10 and FIG. 11, the base 212 can include a tapered surface or a guiding feature 1002. The guiding feature 1002 can at least partially surround the slot 216 to help guide the clip 206 and the tower 204 through the slot 216 toward the hollow portion 214 (FIG. 2). As the clip 206 and the tower 204 are further extended through the slot 216, the clip 206 can engage with the window 226 (FIG. 2).

The clip 206 can include a first arm 1008 and a second arm 1010. The windows 226 can each be configured to receive the clip 206 when the clip 206 and the tower 204 are inserted through the slot 216 and into the hollow portion 214. As the clip 206 and the tower 204 are inserted into the slot 216, the first arm 1008 and the second arm 1010 of the clip 206 can deform inward (e.g., toward the tower 204) as the slot 216 engages with the first arm 1008 and the second arm 1010. As the first arm 1008 and the second arm 1010 are inserted into the first window 1004 and the second window 1006, respectively, the first arm 1008 and the second arm 1010 can rebound away from the tower 204 to couple the trim component 112 to the fastener 114. When the clip 206 is installed within the windows 226, the clip 206, the tower 204, and the trim component 112 can translate relative to the base 212 of the fastener 114 and the vehicle body 110 along the second directional axis 408.

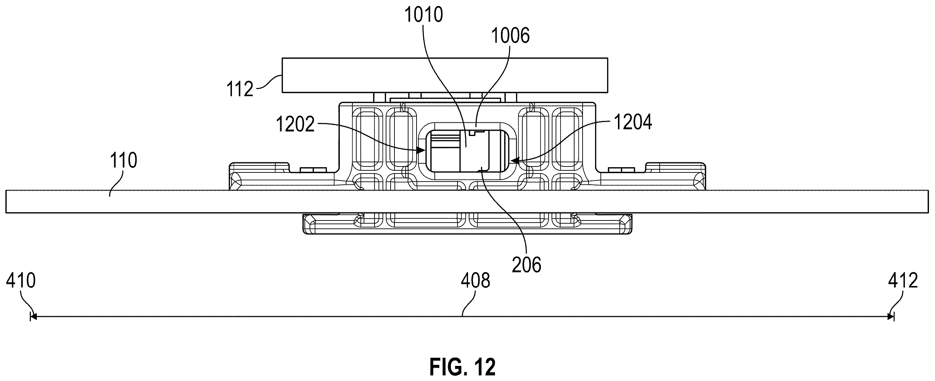

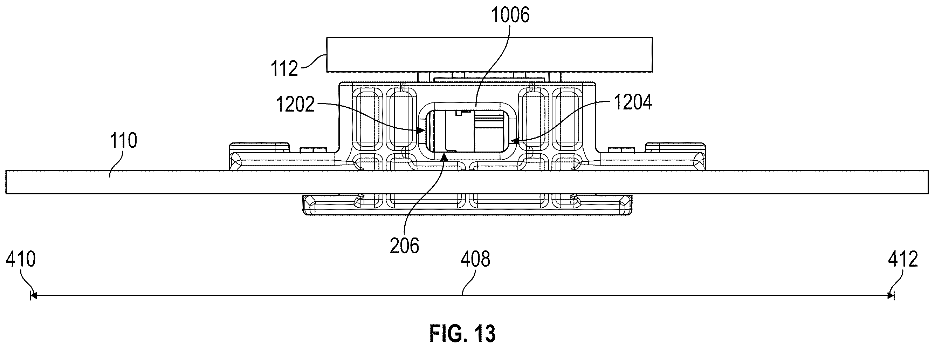

FIG. 12 and FIG. 13 illustrate how engagement between the clip 206 (e.g., the first arm 1008, FIG. 10, and the second arm 1010) and the windows (e.g., the first window 1004 and the second window 1006) can inhibit or limit translation of the base 212 relative to the trim component 112 in the third direction 410 and the fourth direction 412. FIG. 12 illustrates a rear view of the fastener 114 coupling the trim component 112 and the vehicle body 110 where the first surface 1202 of the second window 1006 engages the second arm 1010 of the clip 206 to limit or inhibit translation of the base 212 relative to the trim component 112 in the third direction 410 along the second directional axis 408, according to some examples. FIG. 13 illustrates a rear view of fastener 114 coupling the trim component 112 and the vehicle body 110 where a second surface 1204 of the second window 1006 can engage the clip 206 to limit translation of the base 212 relative to the trim component 112 in the fourth direction 412 along the second directional axis 408, according to some examples. Though the second window 1006 is shown, the first window 1004 can also limit translation of the base 212 relative to the trim component 112 by engaging the first arm 1008 with the first surface 1202 and the second surface 1204. The windows 226 (e.g., the first window 1004 and the second window 1006) can be adjusted to alter an amount of misalignment between the trim component 112, and the vehicle body 110 can be accommodated by the trim component 112. For example, the windows 226 can be extended in either or both of the third direction 410 or the fourth direction 412 to increase a level of misalignment accommodated by the base 212.

When the clip 206 is installed on the tower 204 of the trim component 112 and the clip 206 is inserted through the slot 216 (FIG. 2) formed in on the sixth wall 302 and the base 212 is inserted into the cutout 202 (FIG. 2) of the vehicle body 110 the engagement between the clip 206 (e.g., the first arm 1008 and the second arm 1010) and the windows 226 of the base 212 and the first track 222 and the second track 224 of the base 212 and the vehicle body 110 can couple the vehicle body 110 and the trim component 112. Further, the engagement between first arm 1008 and the second arm 1010 of the clip 206 and the windows 226 of the base 212 and the first track 222 and the second track 224 of the base 212 and the vehicle body 110 can limit, inhibit, or prevent translation of the trim component 112 away from the vehicle body 110.

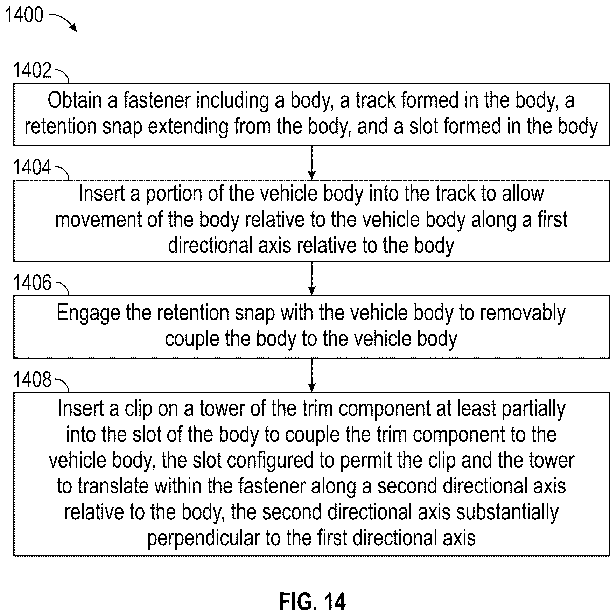

FIG. 14 illustrates a flowchart of an example of a method 1400 of installing a fastener (e.g., the fastener 114, FIG. 1) to couple a trim component (e.g., a trim component 112, FIG. 1) and a vehicle body (e.g., the vehicle body 110, FIG. 1), in accordance with one example. The method 1400 can optionally include any one or more of operation 1402 - operation 1408.

At operation 1402, the method 1400 can include obtaining a fastener including a body, a track formed in the body, a retention snap extending from the body, and a slot formed in the body. For example, the method 1400 can include obtaining the fastener 114 (FIG. 1) including a base 212 (FIG. 2), a first track 222 (FIG. 2) formed in the base 212, a first retention snap 218 (FIG. 2) extending from the base 212, and a slot 216 (FIG. 2) formed in the base 212.

An operation 1404, method 1400 can include inserting a portion of the vehicle body into the track to allow movement of the body relative to the vehicle body along a first directional axis relative to the body. For example, the method 1400 can include inserting a portion of the vehicle body 110 into the first track 222 to allow movement of the base 212 relative to the vehicle body 110 along a first directional axis 402 (FIG. 4) relative to the base 212.

At operation 1406, the method 1400 can include engaging the retention snap with the vehicle body to removably couple the body to the vehicle body. For example, the method 1400 can include engaging the first retention snap 218 with the vehicle body 110 to removably couple the base 212 to the vehicle body 110.

At operation 1408, the method 1400 can include inserting a clip on a tower of the trim component at least partially into the slot of the body to couple the trim component to the vehicle body, the slot configured to permit the clip and the tower to translate within the fastener along a second directional axis relative to the body, the second directional axis substantially perpendicular to the first directional axis. For example, the method 1400 can include inserting a clip 206 (FIG. 2) on a tower 204 (FIG. 2) of the trim component 112 at least partially into the slot 216 of the base 212 to couple the trim component 112 to the vehicle body 110. As discussed herein, the slot 216 can be configured to permit the clip 206 and the tower 204 to translate within the fastener 114 along a second directional axis 408 relative to the base 212. The second directional axis 408 can be substantially perpendicular to the first directional axis 402.

As discussed herein, the fastener 114 can be used for various applications and can help address misalignments between the vehicle body and the trim components of automotive vehicles. The fastener 114 can support a high load-bearing capacity and durability, which can be advantageous in demanding environments. The fastener 114 can also exhibit resistance to corrosion, which can be beneficial for long-term use in automotive vehicles.

The following, non-limiting examples, detail certain aspects of the present subject matter to address at least some of the challenges and provide at least some of the benefits discussed herein, among others.

Example 1 is a fastener for attaching a trim component to a vehicle body, comprising: a body including a track to receive the vehicle body and permit translation of the body relative to the vehicle body along a first directional axis; a retention snap extending from the body, the retention snap engageable with the vehicle body to removably couple the body to the vehicle body; a slot extending through the body, the slot configured to receive a clip, the clip coupled to a tower of the trim component, the slot configured to permit translation of the clip relative to the body along a second directional axis; and a window formed in the body, the window configured to receive the clip when the clip is inserted into the slot to couple the trim component to the vehicle body.

In Example 2, the subject matter of Example 1 optionally includes a tapered interface at least partially surrounding the slot, the tapered interface configured to guide the clip and the tower of the trim component into the slot.

In Example 3, the subject matter of any one or more of Examples 1-2 optionally include wherein the second directional axis is substantially perpendicular to the first directional axis.

In Example 4, the subject matter of any one or more of Examples 1-3 optionally include wherein the body comprises: a second track formed in the body, the second track receives the vehicle body and permits translation of the body relative to the vehicle body along the first directional axis to accommodate misalignment between the trim component and the vehicle body; and a second retention snap extending from the body, the retention snap and the second retention snap extending from opposing sides of the body; the second retention snap engages with the vehicle body to slidingly couple the body to the vehicle body.

In Example 5, the subject matter of Example 4 optionally includes wherein the retention snap and the second retention snap are configured to engage with a first bore and a second bore, respectively, the first bore and the second bore extend at least partially into the vehicle body, and wherein engagement of the retention snap and the second retention snap is configured to limit the translation of the body relative to the vehicle body in a first direction along the first directional axis.

In Example 6, the subject matter of any one or more of Examples 4-5 optionally include wherein the track and the second track are formed on opposing sides of the body such that the track extends from the body in a third direction along the second directional axis and the second track extends from the body in a fourth direction along the second directional axis, the fourth direction opposite the third direction.

In Example 7, the subject matter of Example 6 optionally includes wherein each of the track and the second track comprises: a tapered surface to guide the body within a cutout of the vehicle body, the tapered surface increases a distance between the track and the second track as the tapered surface extends in a second direction along the first directional axis.

In Example 8, the subject matter of Example 7 optionally includes wherein engagement between the cutout of the vehicle body and the track, the second track, or a portion of the body extending between the track and the second track is configured to limit translation of the body relative to the vehicle body in the second direction.

In Example 9, the subject matter of any one or more of Examples 1-8 optionally include wherein the body comprises: a guiding feature formed around the slot, the guiding feature engages with the clip or a tower of the trim component to direct the clip and the tower of the trim component into the slot and toward the window during assembly of the body and the trim component.

In Example 10, the subject matter of any one or more of Examples 1-9 optionally include wherein the window comprises: a first surface to engage the clip to limit translation of the body relative to the trim component in a third direction along the second directional axis; and a second surface to engage the clip to limit translation of the body relative to the trim component in a fourth direction along the second directional axis, the fourth direction opposite the third direction along the second directional axis.

In Example 11, the subject matter of any one or more of Examples 1-10 optionally include wherein the body comprises: a first wall extending along the second directional axis; a second wall extending along the second directional axis; a third wall extending between the first wall and the second wall along the first directional axis, the third wall including the track extending therefrom in a third direction along the second directional axis; and a fourth wall extending between the first wall and the second wall along the first directional axis, the fourth wall including a second track extending therefrom in a fourth direction along the second directional axis; and wherein the first wall, the second wall, the third wall, and the fourth wall define a hollow cross-section of the body.

In Example 12, the subject matter of Example 11 optionally includes wherein the window comprises: a window formed in the first wall; and a second window formed in the second wall; wherein each of the window and the second window is configured to receive the clip when the clip is inserted into the slot to couple the trim component to the vehicle body.

Example 13 is a vehicle trim attachment system, comprising: a vehicle body; a trim component including a tower extending from an underside of the trim component; a clip connected to the tower; and a fastener for attaching a trim component to a vehicle body, the fastener including: a body including a track to receive the vehicle body and permit translation of the body relative to the vehicle body along a first directional axis; a retention snap extending from the body, the retention snap engageable with the vehicle body to removably couple the body to the vehicle body; a slot extending through the body, the slot configured to receive a clip, the clip coupled to a tower of the trim component, the slot configured to permit translation of the clip relative to the body along a second directional axis; and a window formed in the body, the window configured to receive the clip when the clip is inserted into the slot to couple the trim component to the vehicle body.

In Example 14, the subject matter of Example 13 optionally includes wherein the fastener comprises: a tapered interface at least partially surrounding the slot, the tapered interface configured to guide the clip and the tower of the trim component into the slot.

In Example 15, the subject matter of any one or more of Examples 13-14 optionally include wherein the body comprises: a second track formed in the body, the second track receives the vehicle body and permits translation of the body relative to the vehicle body along the first directional axis; and a second retention snap extending from the body, the retention snap and the second retention snap extending from opposing sides of the body; the second retention snap engages with the vehicle body to slidingly couple the body to the vehicle body.

In Example 16, the subject matter of Example 15 optionally includes wherein the vehicle body comprises: a first bore extending at least partially into the vehicle body; and a second bore extending at least partially into the vehicle body; wherein: the retention snap and the second retention snap are configured to engage the first bore and the second bore, respectively, and engagement of the retention snap and the second retention snap is configured to limit the translation of the body relative to the vehicle body in a first direction along the first directional axis.

In Example 17, the subject matter of any one or more of Examples 13-16 optionally include wherein the body comprises: a first wall extending along the second directional axis; a second wall extending along the second directional axis; a third wall extending between the first wall and the second wall along the first directional axis, the third wall including the track extending therefrom in a third direction along the second directional axis; and a fourth wall extending between the first wall and the second wall along the first directional axis, the fourth wall including a second track extending therefrom in a fourth direction along the second directional axis; and wherein the first wall, the second wall, the third wall, and the fourth wall define a hollow cross-section of the body.

In Example 18, the subject matter of Example 17 optionally includes wherein the window comprises: a first window formed in the first wall; and a second window formed in the second wall; wherein each of the window and the second window is configured to receive the clip when the clip is inserted into the slot to couple the trim component to the vehicle body.

In Example 19, the subject matter of Example 18 optionally includes wherein each of the first window and the second window comprise: a first surface to engage the clip to limit translation of the body relative to the trim component in the third direction along the second directional axis; and a second surface to engage the clip to limit translation of the body relative to the trim component in the fourth direction along the second directional axis, the fourth direction opposite the third direction along the second directional axis.

Example 20 is a method of attaching a trim component to a vehicle body, the method comprising: obtaining a fastener including a body, a track formed in the body, a retention snap extending from the body, and a slot formed in the body; inserting a portion of the vehicle body into the track to allow movement of the body relative to the vehicle body along a first directional axis relative to the body; engaging the retention snap with the vehicle body to removably couple the body to the vehicle body; and inserting a clip on a tower of the trim component at least partially into the slot of the body to couple the trim component to the vehicle body, the slot configured to permit the clip and the tower to translate within the fastener along a second directional axis relative to the body, the second directional axis substantially perpendicular to the first directional axis.

Example 21 includes a fastener, fastening system, method, or device including any element of any of Examples 1-20.

The above-detailed description includes references to the accompanying drawings, which form a part of the detailed description. The drawings show, by way of illustration, specific examples that may be practiced. These examples are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The term "about," as used herein, means approximately, in the region of, roughly, or around. When the term "about" is used in conjunction with a numerical range, it modifies that range by extending the boundaries above and below the numerical values set forth. In general, the term "about" is used herein to modify a numerical value above and below the stated value by a variance of 10%. In one aspect, the term "about" means plus or minus 10% of the numerical value of the number with which it is being used. Therefore, about 50% means in the range of 45%-55%. Numerical ranges recited herein by endpoints include all numbers and fractions subsumed within that range (e.g., 1 to 5 includes 1, 1.5, 2, 2.75, 3, 3.90, 4, 4.24, and 5). Similarly, numerical ranges recited herein by endpoints include subranges subsumed within that range (e.g., 1 to 5 includes 1-1.5, 1.5-2, 2-2.75, 2.75-3, 3-3.90, 3.90-4, 4-4.24, 4.24-5, 2-5, 3-5, 1-4, and 2-4). It is also to be understood that all numbers and fractions thereof are presumed to be modified by the term "about."

The above description is intended to be illustrative, and not restrictive. For example, the above-described examples (or one or more aspects thereof) may be used in combination with each other. Other examples may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed example.

## Claims

1. A fastener for attaching a trim component to a vehicle body, comprising:
a base including a track configured to receive the vehicle body and permit translation of the base relative to the vehicle body along a first directional axis;
a retention snap extending from the base, the retention snap engageable with the vehicle body to removably couple the base to the vehicle body;
a slot extending through the base and defined by the base, the slot configured to receive a clip, the clip coupled to a tower of the trim component, the slot configured to permit translation of the clip relative to the base along a second directional axis; and
a window defined by the base, the window configured to receive the clip when the clip is inserted into the slot to couple the trim component to the vehicle body.

2. The fastener of claim 1, comprising:
a tapered interface at least partially surrounding the slot, the tapered interface configured to guide the clip and the tower of the trim component into the slot; or optionally
wherein the second directional axis is substantially perpendicular to the first directional axis.

3. The fastener of claim 1, wherein the track includes a first track and the retention snap includes a first retention snap, and wherein the base comprises:
a second track formed in the base, the second track is configured to receive the vehicle body and permits translation of the base relative to the vehicle body along the first directional axis to accommodate misalignment between the trim component and the vehicle body; and
a second retention snap extending from the base, the first retention snap and the second retention snap extending from opposing sides of the base; the second retention snap configured to engage with the vehicle body to slidingly couple the base to the vehicle body.

4. The fastener of claim 3, wherein the first retention snap and the second retention snap are configured to engage with a first bore and a second bore, respectively, the first bore and the second bore extend at least partially into the vehicle body, and wherein engagement of the first retention snap and the second retention snap is configured to limit the translation of the base relative to the vehicle body in a first direction along the first directional axis.

5. The fastener of claim 3, wherein the first track and the second track are formed on opposing sides of the base such that the track extends from the base in a third direction along the second directional axis and the second track extends from the base in a fourth direction along the second directional axis, the fourth direction opposite the third direction.

6. The fastener of claim 5, wherein each of the first track and the second track comprises:
a tapered surface to guide the base within a cutout of the vehicle body, the tapered surface increases a distance between the first track and the second track as the tapered surface extends in a second direction along the first directional axis.

7. The fastener of claim 6, wherein engagement between the cutout of the vehicle body and the first track, the second track, or a portion of the base extending between the first track and the second track is configured to limit translation of the base relative to the vehicle body in the second direction.

8. The fastener of any one of the preceding claims, wherein the base comprises:
a guiding feature formed around the slot, the guiding feature configured to engage with the clip or a tower of the trim component to direct the clip and the tower of the trim component into the slot and toward the window during assembly of the base and the trim component; or optionally
wherein the window comprises:
a first surface configured to engage the clip to limit translation of the base relative to the trim component in a third direction along the second directional axis; and
a second surface configured to engage the clip to limit translation of the base relative to the trim component in a fourth direction along the second directional axis, the fourth direction opposite the third direction along the second directional axis.

9. The fastener of any one of the preceding claims, wherein the base comprises:
a first wall extending along the second directional axis;
a second wall extending along the second directional axis;
a third wall extending between the first wall and the second wall along the first directional axis, the third wall including the track extending therefrom in a third direction along the second directional axis; and
a fourth wall extending between the first wall and the second wall along the first directional axis, the fourth wall including a second track extending therefrom in a fourth direction along the second directional axis; and
wherein the first wall, the second wall, the third wall, and the fourth wall define a hollow cross-section of the base; and optionally
wherein the window comprises a first window and a second window, wherein the first wall defines the first window and the second wall defines the second window, and wherein each of the first window and the second window is configured to receive the clip when the clip is inserted into the slot to couple the trim component to the vehicle body.

10. A vehicle trim attachment system, comprising:
a vehicle body;
a trim component including a tower extending from an underside of the trim component;
a clip connected to the tower; and
the fastener as claimed in claim 1.

11. The vehicle trim attachment system of claim 10, wherein the fastener comprises:
a tapered interface at least partially surrounding the slot, the tapered interface configured to guide the clip and the tower of the trim component into the slot.

12. The vehicle trim attachment system of claim 10, wherein the track includes a first track and the retention snap includes a first retention snap, and wherein the base comprises:
a second track formed in the base, the second track receives the vehicle body and permits translation of the base relative to the vehicle body along the first directional axis; and
a second retention snap extending from the base, the first retention snap and the second retention snap extending from opposing sides of the base; the second retention snap engages with the vehicle body to slidingly couple the base to the vehicle body; and optionally
wherein the vehicle body comprises:
a first bore extending at least partially into the vehicle body; and
a second bore extending at least partially into the vehicle body; and
wherein:
the first retention snap and the second retention snap are configured to engage the first bore and the second bore, respectively, and
engagement of the first retention snap and the second retention snap is configured to limit the translation of the base relative to the vehicle body in a first direction along the first directional axis.

13. The vehicle trim attachment system of claim 10, wherein the base comprises:
a first wall extending along the second directional axis;
a second wall extending along the second directional axis;
a third wall extending between the first wall and the second wall along the first directional axis, the third wall including the track extending therefrom in a third direction along the second directional axis; and
a fourth wall extending between the first wall and the second wall along the first directional axis, the fourth wall including a second track extending therefrom in a fourth direction along the second directional axis; and
wherein the first wall, the second wall, the third wall, and the fourth wall define a hollow cross-section of the base.

14. The vehicle trim attachment system of claim 13, wherein the window includes a first window and a second window, wherein the first wall defines the first window and the second wall defines the second window, and wherein each of the first window and the second window is configured to receive the clip when the clip is inserted into the slot to couple the trim component to the vehicle body; and optionally
wherein each of the first window and the second window comprise:
a first surface to engage the clip to limit translation of the base relative to the trim component in the third direction along the second directional axis; and
a second surface to engage the clip to limit translation of the base relative to the trim component in the fourth direction along the second directional axis, the fourth direction opposite the third direction along the second directional axis.

15. A method of attaching a trim component to a vehicle body, the method comprising:
obtaining a fastener including a base, a track defined by the base, a retention snap extending from the base, and a slot formed in the base;
inserting a portion of the vehicle body into the track to allow movement of the base relative to the vehicle body along a first directional axis relative to the base;
engaging the retention snap with the vehicle body to removably couple the base to the vehicle body; and
inserting a clip on a tower of the trim component at least partially into the slot of the base to couple the trim component to the vehicle body, the slot configured to permit the clip and the tower to translate within the fastener along a second directional axis relative to the base, the second directional axis substantially perpendicular to the first directional axis.
